# EUROPEAN PATENT APPLICATION

(11) **EP 1 128 669 A2**
(43) Date of publication of application: **29.08.2001**
(21) Application number: 00127076.8
(22) Date of filing: 11.12.2000
(51) Int. Cl.: H04N 5/445

(54) **Program guide displaying apparatus and method**

(30) Priority: 28.02.2000 JP 2000056008
(71) Applicant: Pioneer Corporation, Tokyo-to (JP)
(72) Inventor: Inoue, Tatsu, Pioneer Corporation, Ohmori Works., Tokyo-to (JP)
(74) Representative: Viering, Jentschura & Partner

(57) **Abstract**

A program guide displaying apparatus (1) is provided with: a program information obtaining device (3 to 7) for obtaining program information including information indicative of a program name, a genre name, a start time, a length of a program or an end time, a broadcasting channel and a broadcasting date of respective one of a plurality of programs; and a program information displaying device (8, 9, 200) for displaying the program information as for the programs in a first display mode or a second display mode which are exchangeable to each other, wherein said program information displaying device displays the program information in such a manner that the programs are distinguishable from each other by colors set for respective genres of the programs for a wide time range on a time axis and a wide channel range on a channel axis in the first display mode and that the programs are distinguishable from each other by at least program names of the programs for a narrow time range on the time axis and a narrow channel range on the channel axis in the second display mode. The apparatus is also provided with: a range displaying device (9, 17, 200) for displaying a program table range to be displayed in the second display mode in such a manner that the program table range is distinguishable on a program table displayed in the first display mode; and a moving device (9, 17) for moving the program table range on the program table.

## Description

### BACKGROUND OF THE INVENTION

### 1. Field of the Invention

The present invention relates to an EPG (Electronic Program Guide).

### 2. Description of the Related Art

There is a digital broadcasting system, in which a digitized television signal is transmitted through a broadcasting satellite, a communicating satellite or the like, and is received by each home so that a user can view a television program. In such a system, since a plurality of channels can be reserved, it is possible to broadcast a large number of programs.

In the digital broadcasting system, information related to an EPG indicating the broadcasting contents of a large number of programs is transmitted from the satellite to each home together with video and audio information of the programs. At each home, the user operates a receiving apparatus so as to display the EPG on a TV (Television) set and search for his or her favorite program. Normally, in the display of the EPG, the user uses a remote control device attached to the receiving apparatus to search for the favorite program.

However, in this kind of digital broadcasting system, since more than 100 channels can be watched, it is a time and labor consuming job for the user to search for the favorite program from among the channels and select it. Thus, it is desired that the displayed EPG allows the user to easily search for his or her favorite program.

### SUMMARY OF THE INVENTION

It is therefore an object of the present invention to provide an apparatus for and a method of displaying a program guide, which enables a user to speedily search for his or her favorite program by a relatively simple operation.

The above object of the present invention can be achieved by a first program guide displaying apparatus provided with: a program information obtaining device for obtaining program information including information indicative of a program name, a genre name, a start time, a length of a program or an end time, a broadcasting channel and a broadcasting date of respective one of a plurality of programs; a program information displaying device for displaying the program information as for the programs in a first display mode or a second display mode which are exchangeable to each other, wherein the program information displaying device displays the program information in such a manner that the programs are distinguishable from each other by colors set for respective genres of the programs for a first time range on a time axis and a first channel range on a channel axis in the first display mode and that the programs are distinguishable from each other by at least program names of the programs for a second time range, which is narrower than the first time range, on the time axis and a second channel range, which is narrower than the first channel range, on the channel axis in the second display mode; a range displaying device for displaying a program table range to be displayed in the second display mode in such a manner that the program table range is distinguishable on a program table displayed in the first display mode; a movement specifying device for receiving an instruction to move the program table range; and a moving device for moving the program table range on the program table displayed in the first display mode, in response to the instruction received by the movement specifying device, wherein the moving device moves the program table range for a distance equivalent to a predetermined number of unit-time-periods in a time axis direction and a predetermined number of channels in a channel axis direction.

The above object of the present invention can be also achieved by a first program guide displaying method provided with: a program information obtaining process of obtaining program information including information indicative of a program name, a genre name, a start time, a length of a program or an end time, a broadcasting channel and a broadcasting date of respective one of a plurality of programs; a program information displaying process of displaying the program information as for the programs in a first display mode or a second display mode which are exchangeable to each other, wherein the program information displaying process displays the program information in such a manner that the programs are distinguishable from each other by colors set for respective genres of the programs for a first time range on a time axis and a first channel range on a channel axis in the first display mode and that the programs are distinguishable from each other by at least program names of the programs for a second time range, which is narrower than the first time range, on the time axis and a second channel range, which is narrower than the first channel range, on the channel axis in the second display mode; a range displaying process of displaying a program table range to be displayed in the second display mode in such a manner that the program table range is distinguishable on a program table displayed in the first display mode; a movement specifying process of receiving an instruction to move the program table range; and a moving process of moving the program table range on the program table displayed in the first display mode, in response to the instruction received by the movement specifying process, wherein the moving process moves the program table range for a distance equivalent to a predetermined number of unit-time-periods in a time axis direction and a predetermined number of channels in a channel axis direction.

According to the first program guide displaying apparatus and the first program guide displaying method of the present invention, the program information including information indicative of a program name, a genre name, a start time, a length of a program or an end time, a broadcasting channel and a broadcasting date of respective one of the programs is obtained. Then, the program information as for the programs is displayed in the first display mode or the second display mode, which are exchangeable to each other. Here, in the first display mode, the program information is displayed in such a manner that the programs are distinguishable from each other by colors set for respective genres of the programs for the first time range and the first channel range. On the other hand, in the second display mode, the program information is displayed in such a manner that the programs are distinguishable from each other by at least program names of the programs for the second time range, which is narrower than the first time range and the second channel range, which is narrower than the first channel range. Further, on the program table displayed in the first display mode, the program table range to be displayed in the second display mode is displayed in such a manner that the program table range is distinguishable on the program table. When the instruction to move the program table range is received from the user, the program table range is moved on the program table displayed in the first display mode, in response to the instruction to move it. At this time, the distance for which the program table range is moved is the distance equivalent to the predetermined number of unit-time-periods in the time axis direction and the predetermined number of channels in the channel axis direction. Thus, the user can efficiently inspect the program information in the wide range and can search for his or her favorite program.

The above object of the present invention can be also achieved by a second program guide displaying apparatus provided with: a program information obtaining device for obtaining program information including information indicative of a program name, a genre name, a start time, a length of a program or an end time, a broadcasting channel and a broadcasting date of respective one of a plurality of programs; and a displaying device for displaying the program information as for the programs as a program table. The program table is provided with (i) a plurality of program cells which are displayed in such a manner that the programs are distinguishable from each other by colors set for respective genres of the programs for a first time range on a time axis and a first channel range on a channel axis, (ii) a selected cell display, which is displayed within the program table and indicates a program cell which is currently selected, and (iii) a popup display, which is displayed at a vicinity of the selected cell display on the program table and indicates information related to the program corresponding to the program cell which is currently selected, wherein the popup display is displayed at a position determined in correspondence with a position of the program cell, which is currently selected, in the program table.

The above object of the present invention can be also achieved by a second program guide displaying method provided with: a program information obtaining process of obtaining program information including information indicative of a program name, a genre name, a start time, a length of a program or an end time, a broadcasting channel and a broadcasting date of respective one of a plurality of programs; and a displaying process of displaying the program information as for the programs as a program table. The program table is provided with (i) a plurality of program cells which are displayed in such a manner that the programs are distinguishable from each other by colors set for respective genres of the programs for a first time range on a time axis and a first channel range on a channel axis, (ii) a selected cell display, which is displayed within the program table and indicates a program cell which is currently selected, and (iii) a popup display, which is displayed at a vicinity of the selected cell display on the program table and indicates information related to the program corresponding to the program cell which is currently selected, wherein the popup display is displayed at a position determined in correspondence with a position of the program cell, which is currently selected, in the program table.

According to the second program guide displaying apparatus and the second program guide displaying method of the present invention, the program information including information indicative of a program name, a genre name, a start time, a length of a program or an end time, a broadcasting channel and a broadcasting date of respective one of the programs is obtained. Then, the program information as for the programs is displayed as the program table. The program table is provided with (i) the program cells which are displayed in such a manner that the programs are distinguishable from each other by colors set for respective genres of the programs for the first time range and the first channel range. The program table is also provided with the selected cell display, which is displayed within the program table and indicates the currently selected program cell. The program table is further provided with a popup display, which is displayed at a vicinity of the selected cell display on the program table and indicates information related to the program corresponding to the currently selected program cell. At this time, the popup display is displayed at the position determined in correspondence with the position of the program cell, which is currently selected, in the whole of the program table. Thus, the user can obtain the detailed information as for a certain program included in the program table while the user views the program table in the wide range.

The nature, utility, and further features of this invention will be more clearly apparent from the following detailed description with respect to preferred embodiments of the invention when read in conjunction with the accompanying drawings briefly described below.

### BRIEF DESCRIPTION OF THE DRAWINGS

FIG. 1 is a block diagram showing a structure of a satellite digital broadcast receiving apparatus as an embodiment of the present invention;
FIG. 2 is a diagram showing a method of transmitting data in a digital broadcast in the embodiment;
FIG. 3 is a plan view of a picture plane showing one example of an EPG display in the embodiment;
FIG. 4 is a diagram schematically showing a concept of a structure of EPG display data in the embodiment;
FIG. 5 is a front view of a remote controller used with the receiving apparatus of FIG. 1 in the embodiment;
FIG. 6 is a diagram showing an example of a whole display EPG and a partial display EPG in the embodiment;
FIG. 7 is a plan view of a picture plane showing one example of a popup mode display in the embodiment;
FIGS. 8A to 8D are diagrams for explaining a method of displaying the popup mode display in the embodiment;
FIGS. 9A to 9D are other diagrams for explaining a method of displaying the popup mode display in the embodiment;
FIG. 10 is a flowchart showing a process of displaying the whole display EPG in the embodiment;
FIG. 11 is a flowchart showing a process in a day-of-week EPG display mode in the processes of FIG. 10; and
FIG. 12 is a flowchart showing a process in a popup mode in the processes of FIG. 10.

### DETAILED DESCRIPTION OF THE PREFERRED EMBODIMENTS

Referring to the accompanying drawings, embodiments of the present invention will be now explained.

### (I) Structure of Receiving Apparatus

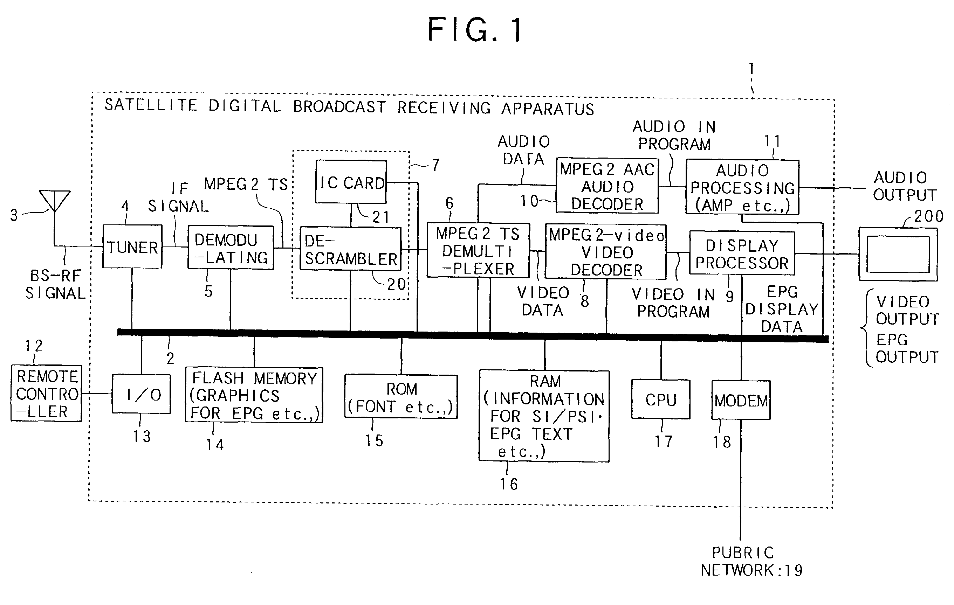

FIG. 1 shows a structure of a satellite digital broadcast receiving apparatus as an embodiment of the present invention. A satellite digital broadcast receiving apparatus 1 shown in FIG. 1 is equipped in each home of a viewer or user, receives a digital broadcast signal (i.e., a broadcast wave) from a satellite and displays a television (TV) program corresponding to it on a picture plane of the television (TV) set at home. Further, the receiving apparatus 1 receives information related to the EPG transmitted from the satellite simultaneously with the digital broadcast signal, and display it on the picture plane of the television set in response to an instruction of the viewer.

As shown in FIG. 1, the receiving apparatus 1 has a structure in which various constitutional elements are connected to a communication bus 2. The receiving apparatus 1 is operative by an attached remote controller 12.

A broadcast wave transmitted from a satellite (i.e., a BS-RF signal) is received by an antenna 3 and is transmitted to a tuner 4 within the receiving apparatus 1. This broadcast wave includes video and audio information of a TV program (which is referred to as "TV program information", hereinafter), as well as the information to be used for displaying the EPG (which is referred to "SI (Service Information)" hereinafter). The tuner 4 is tuned to a receiving band selected by the user, converts the received signal wave to an IF (Intermediate Frequency) signal, and sends it to a demodulating unit 5. The demodulating unit 5 demodulates the inputted digital signal, applies predetermined signal processes such as a re-construction of data frames, an error correcting process and so forth, and supplies it through a de-scrambler 20 to a demultiplexer 6 in a format of a transport stream (which is referred to as a "TS" hereinafter) of the MPEG 2.

The demultiplexer 6 extracts the audio data and video data corresponding to the selected service from among the inputted TS of the MPEG 2, and supplies them to an audio decoder 10 and a video decoder 8 respectively. Here, the audio data is in the format of MPEG 2-AAC, while the video data is in the format of MPEG 2 -Video. The audio decoder 10 decodes the inputted audio data to generate "program audio data" and supplies it to an audio processing unit 11. The audio processing unit 11 includes an amplifier and applies a predetermined audio signal process onto this program audio data, to thereby generate an audio output.

On the other hand, the video decoder 8 decodes the inputted video data to generate "program video data" and supplies it to a display processor 9. The display processor 9 applies a predetermined process onto this program video data, to thereby output a video output to a TV display device 200. Further, the display processor 9 has a function of superimposing character information on the program video image displayed on the picture plane of the TV displaying device 200. The EPG display data described later in detail is superimposed on the program video data by the display processor 9 and is outputted such that the program video data is partially replaced by the EPG display data, to be thereby displayed on the TV displaying device 200.

The demultiplexer 6 extracts control data including the SI out of the TS in the inputted MPEG 2. The SI is the origin of the EPG display data. The EPG displaying process is performed by using this SI. The control data including the SI extracted by the demultiplexer 6 is stored into a RAM 16 under the control of a CPU 17. Also in the RAM 16, EPG text data to perform the EPG display is stored. A flash memory 14 stores various graphic data to perform the EPG display (e.g., a frame of a program table, a predetermined mark such as a logo mark of each broadcast channel). A ROM 15 stores font data used as the EPG text data and the like.

A limited reception processing unit 7 including the de-scrambler 20 performs a following process. Namely, the limited reception broadcasting of a prior contract (or a prior agreement) type is done by a service unit or a program unit, so that the TS of the relevant MPEG 2 is scrambled (or enciphered) and is then transmitted. The limited reception processing unit 7 consists of the de-scrambler 20, as a de-scramble or decipher processing unit, and an IC card 21 for storing contract information and judging the limitation or allowance of viewing for each user. The IC card 21 is distributed to each user of the receiving apparatus from a service center commonly owned by broadcasting providers. On the IC card 21, the user contract information is described in correspondence with a contract condition between the user and each broadcasting provider. In general, the described content of the IC card 21 is different between the respective users. In case that the user selects the limited broadcast program, the limited reception processing unit 7 uses both of the user contract information stored in the IC card 21 and the de-scrambling related information obtained from the broadcast wave, and thereby performs the de-scrambling process for the TS in the MPEG 2 if the user has a contract for the pertinent service or program. Thus, the user can view this program. On the other hand, if the user does not have such a contract, the de-scrambling process for the TS in the MPEG 2 is not performed, so that the user cannot view this limited reception broadcast program.

Further, in case of the "pay per view program", each time when the user purchases the program, the purchase condition is described into the IC card 21. Then, the pay per view program purchasing information is transmitted from the side of the receiving apparatus 1 to the side of the broadcast provider through the modem 18 and the public network 19 in a predetermined cycle.

The instruction inputted by the user using the remote controller 12 is transmitted through the interface (I/O) 13 to the CPU 17 and is recognized there. The CPU 17 controls the respective constitutional elements within the receiving apparatus 1 in accordance with the instruction given by the user. For example, the instruction to tune a frequency of the channel specified by the user is transmitted to the tuner 4.

In case of the EPG display, the CPU 17 generates the EPG text data from the SI stored in the RAM 16 as the source. Next, the CPU 17 generates the EPG display data by using the graphic data such as the frame data for the TV program table stored in the flash memory 14, the font data stored in the ROM 15 as well as the EPG text data, and then supplies it to the display processor 9. The display processor 9 switches the program video data from the video decoder 8 and the EPG display data to each other, on the basis of the switching instruction from the CPU 17, so as to superimpose the EPG display data on the program data and then output it as the video signal to the TV displaying device 200.

To the communication bus 2, the public network 19 is connected via the modem 18, so as to connect the receiving apparatus 1 with a telephone, a personal computer or the like of the user and thereby perform a necessary communication between the broadcasting station and the home of the viewer.

### (II) Signal Format

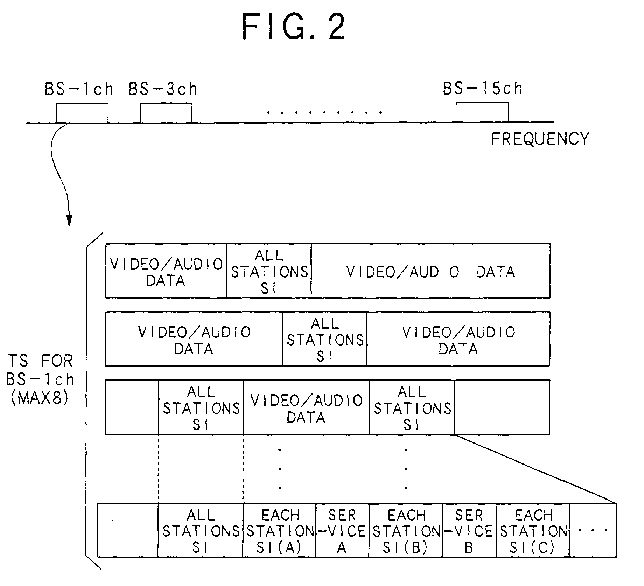

Next, a digital signal is explained, which is transmitted from a satellite as the data, which becomes the source of the EPG display data. FIG. 2 schematically shows a data format of the digital signal. As shown in FIG. 2, in the satellite digital broadcasting system, a plurality of BS channels (bands) are set so that it is possible to transmit 8 TSs in the MPEG 2 at the maximum for each BS channel. Further, it is possible to transmit 32 services at the maximum by one TS. In the following explanation, the frequency band in the satellite broadcast is called as a "BS channel", and is differentiated from the channel for each broadcast program, which is received by the receiving apparatus 1.

In each TS, an all stations SI is multiplexed in the information such as the video information and the audio information. The all stations SI is the SI for all the broadcasting stations, and includes the TV program arrangement information for all the channels. Namely, the all stations SI having the same content is multiplexed on all the TSs of all the BS channels and is then transmitted. By this, even if the channel is received by the user from any one of the broadcasting stations, it is possible to generate the EPG data for all the channels by obtaining the all stations SI included in the TS in this received channel. More concretely, the CPU 17 shown in FIG. 1 obtains the all stations SI from the TS, which is currently being received, by controlling the demultiplexer 6, to thereby constitute the EPG text data on the basis of the obtained all stations SI.

The lower portion of FIG.2 shows the format of the video and audio data in each TS. It has been explained such that the 32 services at the maximum can be transmitted for each TS. These services are time-division-multiplexed in the form of packets within one TS. In the example shown in FIG. 2, the services of the broadcasting stations (e.g., the service A, the service B, ...) are time-division-multiplexed in the TS positioned at the lowest in the figure. Therefore, in order to receive the service A for example, the CPU 17 firstly controls the tuner 4 shown in FIG. 1 to tune the BS channel which includes the TS. Then, the demodulating unit 5 identifies and extracts the TS of the target from among a plurality of TSs included in the BS channel. Then, the demultiplexer 6 extracts the service A, which is time-division-multiplexed in the TS, with referring to the identification information of the service A.

Here, as shown in FIG. 2, at the head of data of each service station (which is indicated by the service A, the service B, ...), the "each station SI" is inserted. The each station SI is the information similar to that of the all stations SI, but includes the information dedicated to respective one of the stations, which is not included in the all stations SI. Namely, the all stations SI includes the information necessary to display the program table as for all the channels as the EPG while the each station SI includes the more detailed information such as the summary of each program. Therefore, the CPU 17 in FIG. 1 obtains the each station SI in response to the instruction of the user, so that the summary information as for a specific channel can be displayed.

### (III) Day-of-week EPG

Next, the EPG display picture plane according to the present invention is explained.

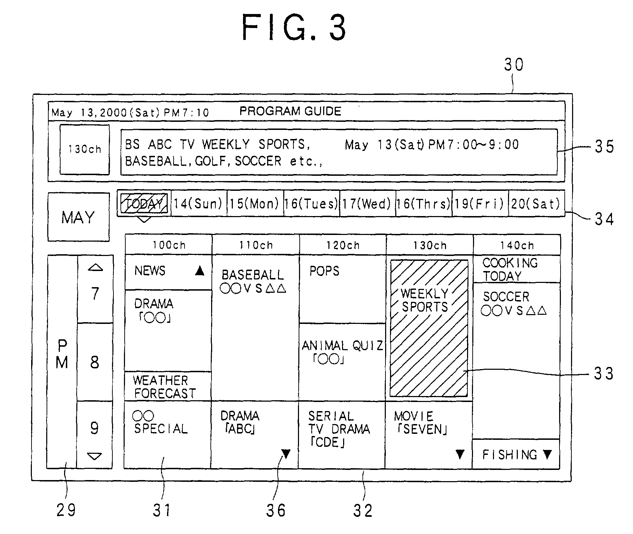

The EPG display picture plane shown in FIG. 3 shows a TV program table of a plurality of channels for each day-of-week, which is referred to as a "day-of-week EPG" in the present invention. As a display aspect of the EPG other than this day-of-week EPG, there are a "genre EPG" which shows the TV programs for each genre, and a "whole display EPG" which is described later in detail. The EPG display picture plane may be displayed large over the whole picture plane of the TV display or may be displayed small such that it is superimposed in the video image of the TV program which is being viewed.

At the top field of a day-of-week EPG 30, the present date and time is displayed. The day-of-week EPG 30 has a TV program table for eight days from the present day to the day next week, which corresponds to the same day-of-week as the present day as shown in FIG. 3. The TV program table is prepared for all the channels for each day-of-week. If one of the days is specified by the user by using a day-of-week tab 34 , the TV program table on the specified day is displayed. Each time when a "day-of-week changing key" 47 of the remote controller 12 as described later is pressed once, the TV program table is changed to one for the next day, so that it returns to the TV program table today after it is changed to the TV program table 7 days ahead of today.

The TV program table is shown in a TV program table display area 32. Each unit divided by the frame is called as a TV program cell 31. On the left side of the TV program table display area 32, there is a time band display area 29. The example of FIG. 3 shows the TV program table having the time band from PM 7:00 to PM 10:00 on May 13^{th}(Sat), 2000. At the upper field of the TV program table display area 32, the TV channels arranged in the lateral direction is shown.

The portion indicated by a cursor 33 (in FIG. 3, which is indicated as a black frame) indicates the program, which is currently selected by the user. In the example of FIG. 3, the program of "weekly sports" is selected. The summary information as for the program which is currently selected is displayed within a summary information field 35 at the upper portion of FIG. 3. This summary information is generated from the all stations SI in each TS described before, as the source.

By moving the cursor 33 in the left and right direction in FIG. 3 by operating the remote controller 12, it is possible for the user to select the TV channel. Also, the change in the time axis direction of the currently displayed TV program table is done by moving the cursor 33 in the up and down direction by the remote controller 12. Those operations will be described later in detail. If the cursor 33 is continuously moved in the time axis direction to pass through the PM 12:00, the day-of-week of the TV program table is automatically change to the next day, so that the cursor 33 is in a condition to select the program cell after AM 00: 00 on the next day. Further, if the cursor 33 is continuously moved to pass through PM 12:00 7 days after ahead of today (e.g., pass through PM 12:00 on 20^{th} (Sat) in the example of FIG. 3), the day-of-week of the TV program table returns to "today", and then the cursor 33 is set in a condition to select the program cell after AM 00:00 today. However, if there is no TV program information in the past, the cursor 33 is set in a condition to select the program cell after the time band for which the program information exists.

In the example of FIG. 3, the program table having a length indicative of 3 hours in the time axis direction and a length indicative of 5 channels in the channel axis direction is shown. However, the present invention is not limited to this. For example, channels in the greater number than 5 may be simultaneously displayed.

Within a certain program cell 31, a continuation mark 36 is displayed. The continuation mark 36 indicates that the TV program appended with the continuation mark 36 continues in the time axis direction indicated by the continuation mark 36 since the broadcasting time duration of the TV program is too long to be displayed within the TV program table display area 32. For example, although the movie "seven" is a two hours program starting from PM 9:00 at the channel 130 in FIG. 3 (hereinafter, the channel N is referred to simply as the "Nch"), the whole of this program cannot be displayed since the time band is limited until PM 10:00. Accordingly, the fact that this program continues after PM 10:00 is indicated by the continuation mark 36. Incidentally, the continuation mark 36, which is directed upward (i.e., ▲ in the figure), indicates that the time band of the program continues in the up direction (i.e., in the direction of earlier in time). On the other hand, the continuation mark 36, which is directed downward (i.e., ▼ in the figure), indicates the time band of the program continues in the down direction (i.e., in the direction of later in time).

The width along the time axis of a short time program (such as a weather forecast, a news or the like) for 3 to 5 minutes may be too short to display the character or text indicating the title of the TV program in the EPG display. In such a case, only the program cell may be shown in the EPG display, so that the content of the short program is shown in the summary information field 35 when the user selects such a short program cell. By this, the user can check the content of such a short time program.

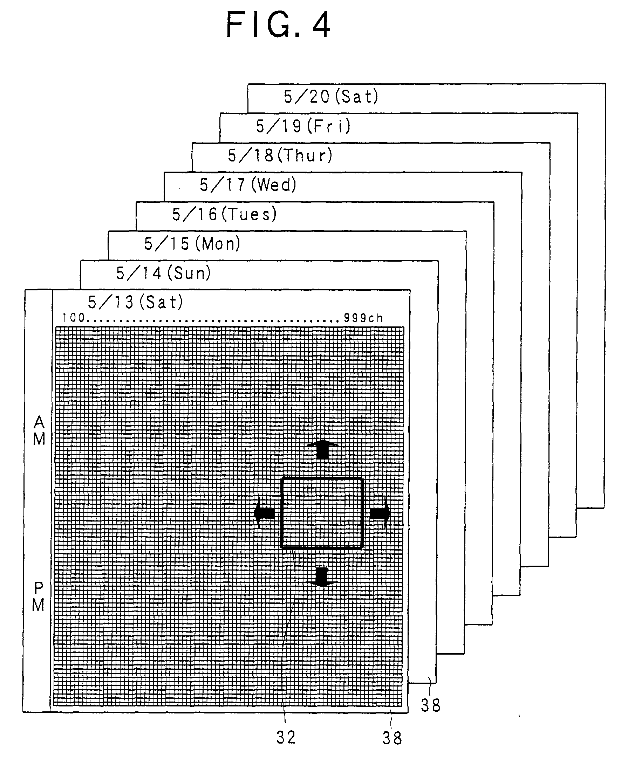

FIG. 4 is a diagram schematically showing the data structure of the day-of-week EPG. As described above, in the day-of-week EPG, the TV program tables for eight days from today to the same day-of-week next week are displayed for each day. Namely, it may be considered such that one TV program table for all channels for each day-of-week is one sheet of a day-of-week EPG sheet 38 and that such a day-of-week EPG 38 is prepared for each day from today until 7 days ahead. Therefore, if the user specifies "today" in the day-of-week tab 34 in FIG. 3, the program table for today is displayed as shown in FIG. 3. If the user specifies "14 (Sun)" in the day-of-week tab 34 in FIG. 3, the program table for May 14^{th}, 2000 (which is tomorrow) is displayed.

The portion displayed as the day-of-week EPG 30 as shown in FIG. 4 is only a portion of one sheet of the day-of-week sheet 38. The display example of FIG. 3 is an example of the day-of-week EPG at PM 07:00 on May 13^{th} (Sat), so that the TV program table from 100ch to 140ch in the time band from PM 07:00 to PM 10:00 is shown. Here, if the user operates the remote controller 12 so as to move the cursor 33 out of the currently displayed range, the program display area 32 shown in FIG. 4 is moved. As a result, one or both of the time band and the channel band of the day-of-week EPG 30 to be displayed is or are changed.

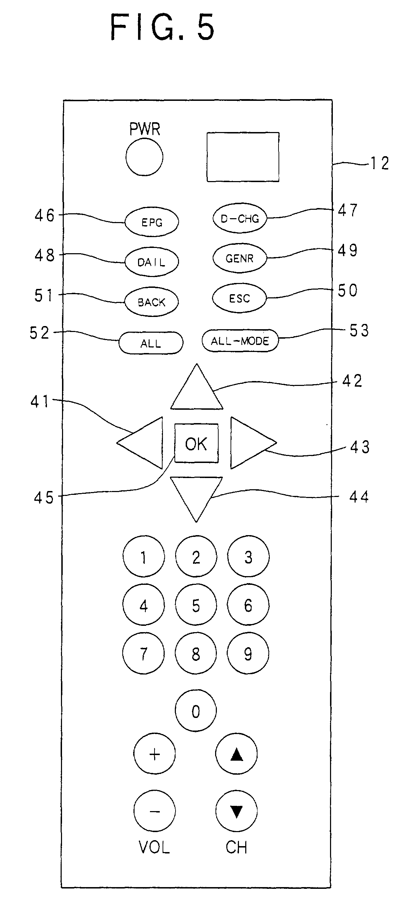

FIG. 5 shows an appearance of the remote controller 12, which is used together with the receiving apparatus 1 of the present invention. Among function keys provided on the upper portion of the remote controller 12, an EPG key 46 is a key to display the EPG picture plane as shown in FIG. 3. Namely, under a condition that a normal program is viewed, if the EPG key 46 is pressed, the picture plane of the TV display is changed from the normal program picture plane to the EPG picture plane as shown in FIG. 3. It is also possible to superimpose such an EPG picture plane on the normal program picture plane. Further, if the EPG key 46 is pressed under a condition that the EPG picture plane is displayed, it is changed back to the original program picture plane. A "day-of-week" ("DAIL") key 48 is located below the EPG key 46, and is to display the day-of-week EPG as shown in FIG. 3. Other than the day-of-week EPG picture plane, there is the genre EPG picture plane as another kind of the EPG picture plane. The day-of-week key 48 is to issue an instruction to select the day-of-week EPG among those various kinds of EPG picture planes.

A "day-of-week changing" ("D-CHG") key 47 is located at a right side of the EPG key 46, and is used to change the day-of-week of the program table in the display. Further, a "genre" ("GENR") key 49 is located below the day-of-week changing key 47, and is to change the EPG picture plane to the genre EPG. An ESC key 50 is located below the genre key 49, and is used to change from the EPG picture plane back to the normal program picture plane. A BACK key 51 is used to cancel an instruction inputted beforehand and returns to the condition before this instruction is inputted.

A "whole display" (ALL) key 52 is located below the BACK key 51, and is used to display the whole display EPG described later. A "whole display mode" (ALL-MODE) key 53 is located beside the whole display key 52. For the whole display EPG, there are a "day-of-week EPG display selection mode" and a "popup mode" described later in detail. The whole display mode key 53 is used to switch between those two modes.

Cursor movement keys (keys 41 to 44) are disposed at a substantial center of the remote controller 12, and are used to move a position of the cursor 33 in FIG. 3. Under a condition of the display as shown in FIG. 3, if a leftward key 41 is pressed, the cursor moves leftward to an adjacent program cell, while the cursor 33 moves rightward to an adjacent program cell if a rightward key 43 is pressed. Further, if an upward key 42 is pressed, the cursor moves upward to an adjacent program cell, while the cursor 33 moves downward to an adjacent program cell if a downward key 44 is pressed. In addition, it is possible to move the whole display cursor 65 in the later described day-of-week EPG display selection mode as well as the cursor in the popup mode by using those keys 41 to 44 for moving the cursor in the similar manner.

Under a condition that the cursor 33 is just moved by the keys 41 to 44, the selection of the program is not yet confirmed on the processes of the receiving apparatus 1. After the cursor 33 is moved, the selection of the program is confirmed by pressing the confirmation ("OK") key 45. For example, under a condition shown in FIG. 3, the receiving apparatus 1 is receiving the program "sports today" at 130ch. Here, if the user presses the leftward key 41, the cursor 33 is moved leftward to the program cell of "pops", which is on the left side within the TV program table display area 32. However, the program, which the receiving apparatus 1 is presently receiving, is still the "sports today". After that, if the user presses the decision key 45, the receiving apparatus 1 changes the reception channel from 130ch to 120ch, so that the reception of the program "pops" is started and the received image of this program "pops" is displayed.

In case that the program cell, which is ahead (in the future) of the present time, is specified by the keys 41 to 44 and the decision key 45, the reservation picture plane for the TV program corresponding to this specified program cell is normally displayed. By performing an operation instructed by the reservation picture plane, it is possible for the user to view or make a reservation of this TV program. Also, in case that the past TV program information is to be erased by sequentially updating the SI, if the program cell in the past is specified, such a message may be displayed that the TV program corresponding to this specified program has already been broadcasted.

Incidentally, the other keys of the remote controller 12 shown in FIG. 5 are related to the normal reception of the TV program, and they are not directly related to the present invention. Thus, the explanations thereof are omitted.

### (IV) Whole Display EPG

Next, the whole display EPG, which is one of the main portions of the present invention, is explained. The whole display EPG is a wide range display version of the day-of-week EPG shown in FIG. 3, and displays the whole of the day-of-week EPG or the wide range of the day-of-week EPG in one picture plane at once. Because of the limitations of the picture plane size, the resolution and the character size to describe the program information of the TV display, which is actually used, there is a certain limitation in the program displayable area where the day-of-week EPG is displayed as shown in FIG. 3. Thus, the whole display EPG simply displays the TV program table in a very wide range as compared with the day-of-week EPG.

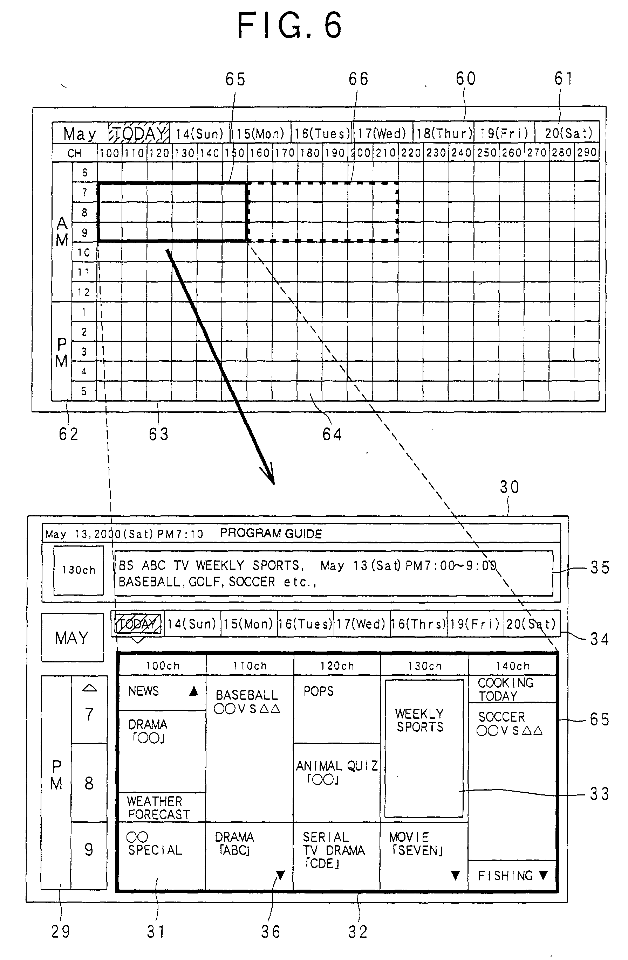

An example of a display picture plane of the whole display EPG is shown in an upper portion of FIG. 6. The range displayable by the whole display EPG is preferably the whole day-of-week EPG as for the time of each day. However, if this is not possible because of the limitations of the TV receiving set etc., to be used, the range displayable by the whole display EPG may be set to the maximum range. When the whole display EPG is to be displayed, the user presses the whole display key 52 of the remoter controller 12 shown in FIG. 5 under a condition that the TV program is being viewed. In addition, if the user presses the whole display key 52 under a condition that the whole display EPG is being displayed, the display of the TV display is changed back to the TV program viewing condition.

The whole display EPG 60 shown in FIG. 6 indicates a TV program table for 12 hours in the time axis direction and for 22 channels in the channel axis direction. This is one example, and it is possible to display another size (or another range). In the upper portion of the whole display EPG 60, the day-of-week tab 61 is displayed in the lateral direction, and the today (May 13^{th}, 2000) is selected in the example of FIG. 6. A time band display area 62 is prepared in the longitudinal direction, and the time range from PM 06:00 to AM 06:00 on May 13^{th} is displayed in this area in the example of FIG. 6. Within the TV program table display area 63, there are displayed a plurality of program cells 64. In the example of FIG. 6, it is assumed that each of the programs is a one hour program for the sake of simplicity.

Each program cell 64 in the whole display EPG 60 does not include the character information for describing the content of the program, which is different from the case of the normal day-of-week EPG shown in FIG. 3. This is because the whole display EPG 60 displays the TV program table in the wide range on one picture plane at once, and thereby the character information for each program cell 64 cannot be displayed. Instead, each program cell 64 is displayed with a genre color corresponding to the content of each program (in FIG. 6, however, the genre color is not displayed). The genre color is a color set in advance for each genre. The TV programs displayed in the program table are categorized in advance according to the respective genres. The examples of the categories for the genre may be movie, sport, news, report and so on, so that each genre color is assigned to respective one of the categories. Therefore, in the whole display EPG 60, in place of describing the content of the program by the character information within each program cell 64, the program cell 64 is displayed with the corresponding genre color. Accordingly, although the user cannot recognize the program title, the user can recognize promptly the genre of each program as well as its cannel band and its time band. In addition, the above described displaying aspects are common for both of the two display modes described hereinafter.

Next, the two modes in the whole display EPG is explained. The whole display EPG has the "day-of-week EPG display selection mode" and the "popup mode". At first, the day-of-week EPG display selection mode is explained.

In the day-of-week display selection mode, as shown in the upper portion of FIG. 6, the whole display cursor 65 is displayed within the TV program table of the whole display EPG. The size of the whole display cursor 65 is the predetermined size which is set in advance. This size corresponds to 5 channels in the channel axis direction and 3 hours in the time axis direction, for example. Preferably, this size may coincide with the size of the program table display area 32 of the day-of-week EPG 30 shown in FIG. 3. In the day-of-week EPG selection mode, the whole display cursor 65 is moved in the up-down direction and in the left-right direction within the program table display area 63. Namely, by pressing the keys 41 to 44 to move the cursor of the remote controller 12 shown in FIG. 5, the whole display cursor 65 is moved in the corresponding direction. In the example of FIG. 6, the whole display cursor 65 specifies the program table area at the time of PM 07:00 to 10:00 for channels 100 to 140. In this condition, if the user presses the key 43 to move the cursor in the rightward direction, the whole display cursor 65 moves to an adjacent program display area, which is indicated by a dashed line frame 66.

The user moves the whole display cursor 65 in the desirable direction while viewing the program cells, which are colored by the genre color in the whole display EPG 60. Then, if the user presses the day-of-week key 48 of the remote controller 12 shown in FIG. 5 under a condition that the whole display cursor 65 has been moved to the desirable position, the day-of-week EPG 30 shown in the lower portion of FIG. 6 is displayed on the TV display. This is the normal day-of-week EPG 30, which has been explained with referring to FIG. 3. Then, the cursor 33 is validated at this time, so that the user can move the cursor 33 within the normal day-of-week EPG, to thereby search for and select the program of his or her favorite. Under the condition that the day-of-week EPG as shown in the lower portion of FIG. 6 is displayed, if the user presses the whole display key 52, the picture plane on the TV display is changed back to the whole display EPG as shown in the upper portion of FIG. 6.

In this manner, the user controls the whole display EPG to be displayed, firstly refers to the genre color of the respective program cells, moves the whole display cursor 65, and searches for the program table area (the channel band and the time band) in which his or her favorite genre program is to be broadcasted. Then, the user presses the day-of-week key 48, under a condition that the whole display cursor 65 has been moved to the searched program table area, to thereby display the day-of-week EPG. Thus, the user can obtain the detailed information. In this way, the user can efficiently search for the program of his or her favorite from among the wide range of the program table while changing the whole display EPG and the day-of-week EPG to each other,

Next, the popup mode is explained. The popup mode is a mode to display summary information of the program cell, which is currently selected, by a popup picture plane under a condition that the whole display EPG is being displayed.

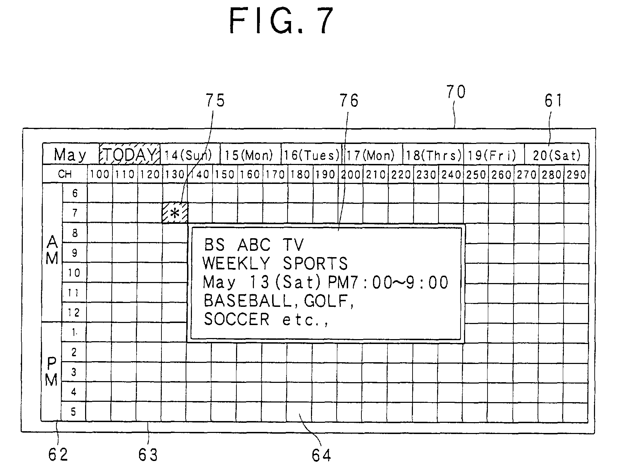

FIG. 7 shows the example of a display picture plane of the popup mode. In FIG. 7, the whole display EPG as the base is the same as the upper portion of FIG. 6, in which the day-of-week tab 61, the time band display area 62, the program table display area 63, a plurality of program cells 64 and so on are displayed. The cursor 75 is to select just one program cell 64, which is different from the case of the whole display cursor 65 in FIG. 6. The cursor 75 is movable in the up-down direction and the right-left direction by operating the keys 41 to 44 to move the cursor of the remote controller 12. The summary information of the program corresponding to the program cell 64, which is selected by the cursor 75, is displayed in a popup picture plane 76. When the user moves the cursor 75, the summary information of the program within the popup picture plane 76 is changed along with this movement of the cursor 75.

It is possible to enter the popup mode by pressing the whole display mode key 53 of the remote controller 12 shown in FIG. 5, in the day-of-week EPG display selection mode of the whole display EPG shown in FIG. 6. Thus, the user can inspect the program table in the wide range by the unit of the whole display cursor 65 by the day-of-week EPG display selection mode as shown in FIG. 6, can enter the popup mode under a condition that the target program table area is determined in some degrees, and can search for the program to be viewed while referring to the summary information of each program.

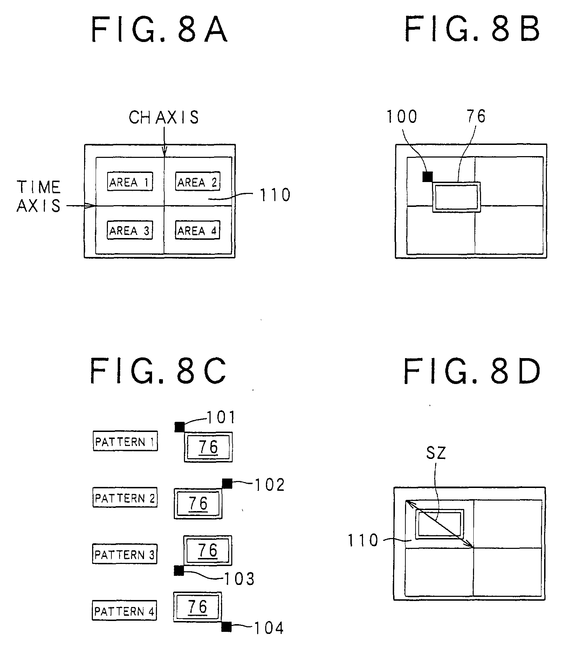

Next, the display position of the popup picture plane in the popup mode is explained. The popup picture plane is displayed in such a manner that one corner of the program which is selected by the cursor 75 and one corner of the popup picture plane 76 are contacted with each other, so that the user can sensuously recognize at which position of the program table is being watched as the program information by the user (refer to FIG. 8B). As another displaying method, the program cell and the popup picture plane 76 may be positioned close to each other or may be continuous to each other.

In more detail, as shown in FIG. 8A, the whole display area of the whole display EPG is divided into 4 areas of "AREA 1 ", "AREA 2", "AREA 3" and "AREA 4".

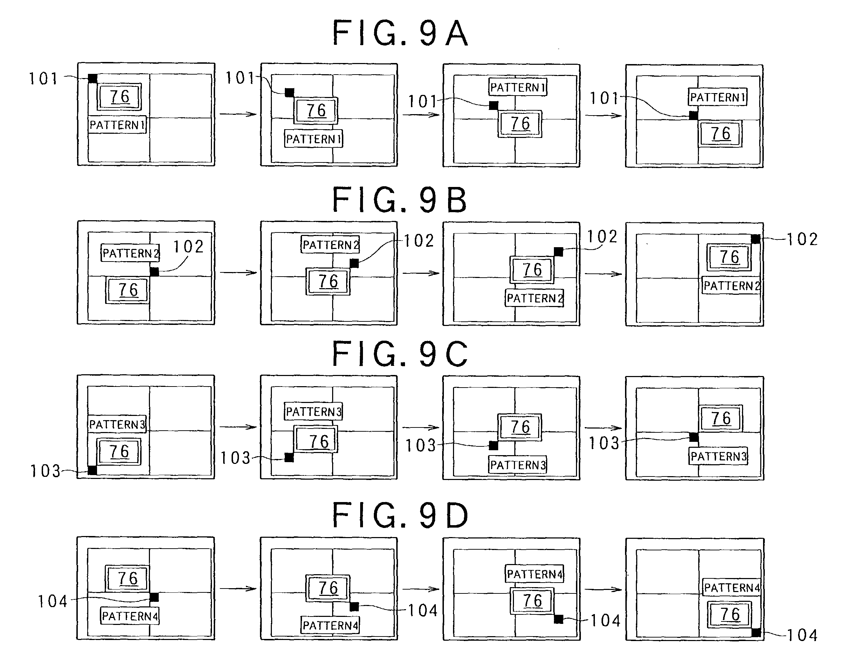

Then, if the cursor 75 is positioned on a program cell 100, which belongs to the AREA 1 as shown in FIG. 8B, a PATTERN 1 in which a program cell 101 is positioned at the left upper corner of the popup picture plane 76 in FIG. 8C is employed for the popup display. The appearance of this popup display is shown in FIG. 9A.

If the cursor 75 is positioned on a program cell, which belongs to the AREA 2, a PATTERN 2 in which a program cell 102 is positioned at the right upper corner of the popup picture plane 76 in FIG. 8C is employed for the popup display. The appearance of this popup display is shown in FIG. 9B.

If the cursor 75 is positioned on a program cell, which belongs to the AREA 3, a PATTERN 3 in which a program cell 103 is positioned at the left lower corner of the popup picture plane 76 in FIG. 8C is employed for the popup display. The appearance of this popup display is shown in FIG. 9C.

If the cursor 75 is positioned on a program cell, which belongs to the AREA 4, a PATTERN 4 in which a program cell 104 is positioned at the right lower corner of the popup picture plane 76 in FIG. 8C is employed for the popup display. The appearance of this popup display is shown in FIG. 9D.

In addition, as shown in FIG. 8D, the size of the popup picture plane 76 does not exceed a size SZ of one of the 4-divided areas 110 of the whole display EPG. By constituting in this manner, regardless of the position of the cursor, the popup picture plane can be displayed by either one of the 4 patterns shown in FIG. 8C.

### (V) DISPLAYING PROCESS IN THE WHOLE DISPLAY EPG

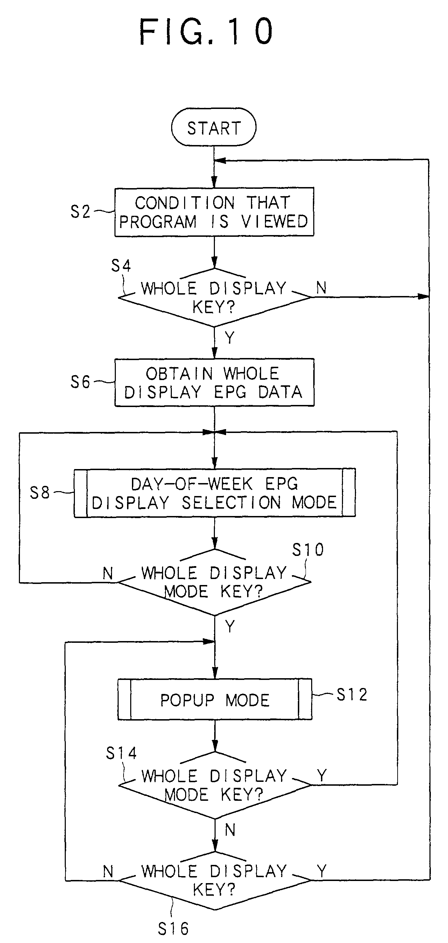

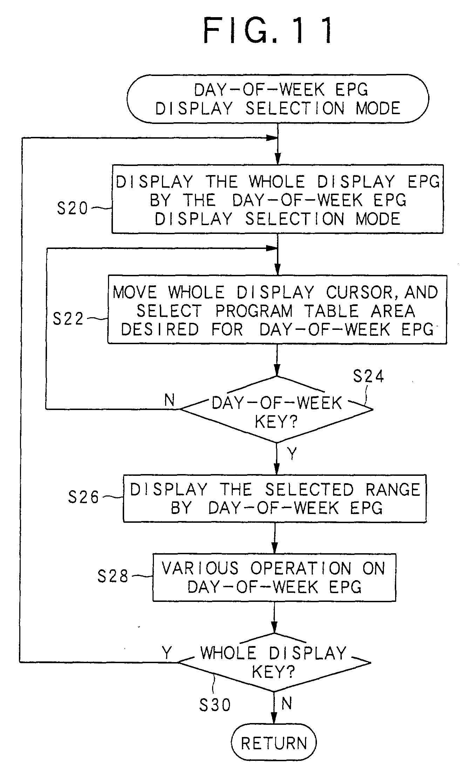

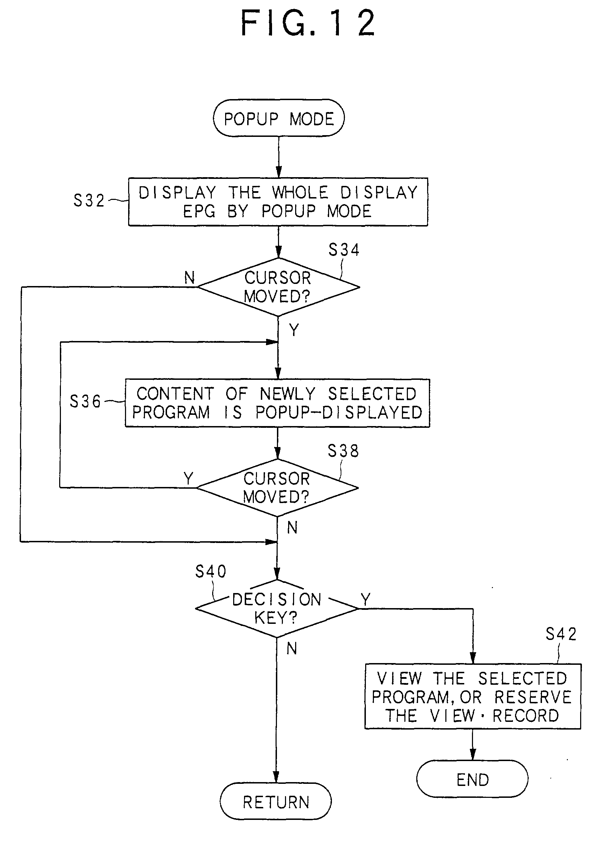

Next, the displaying process in the whole display EPG is explained with reference to flowcharts from FIG 10 to FIG. 12. FIG. 10 shows a main routine of the displaying process in the whole display EPG. FIG. 11 shows a sub-routine of the process in the day-of-week EPG display selection mode in FIG. 10. FIG. 12 shows a sub-routine of the process in the popup mode. The processes explained hereinafter are performed as the CPU 17 shown in FIG. 1 executes the program stored in the ROM 15 to thereby control the respective constitutional elements such as the display processor 9.

In FIG. 10, at first, an initial condition is assumed to be such a condition that the program is viewed by the user (step S2). Here, the CPU 17 monitors whether or not the whole display key 52 of the remote controller 12 is pressed (step S4). As long as the whole display key 52 is not pressed (step S4: NO), the condition that the program is viewed is continued. If the whole display key 52 is pressed (step S4: YES), the CPU 17 obtains the display data for the whole display EPG by referring to the RAM 16 (step S6) Then, the day-of-week EPG display selection mode is started (step S8).

The process in the day-of-week EPG display selection mode is shown in FIG. 11.

In FIG. 11, at first, the whole display EPG picture plane is displayed by the day-of-week EPG display selection mode as shown in the upper portion of FIG. 6 (step S20). Then, the user operates the remote controller 12 so as to move the whole display cursor 65, and selects a desired program table area (step S22). In addition, he initial position of the whole display cursor 65 may be a position where the program which has been watched until that time is included, and this position may be a predetermined position such as a left upper corner or center of the displayed program table.

After the program table area to be displayed is determined, when the user presses the day-of-week key 48 of the remote controller 12 (step S24: YES), the area which is selected by the whole display cursor 65 at that moment is displayed by the day-of-week EPG as shown in the lower portion of FIG. 6 (step S26). Then, the user can perform various operations on the displayed day-of-week EPG (step S28). Next, it is judged whether or not the whole display key 52 is pressed by the user (step S30). If it is pressed (step S30: YES), the operational flow returns to the step S20, so that the EPG display selection mode is continued. On the other hand, if the whole display key 52 is not pressed (step S30: NO), the operational flow returns to FIG. 10.

Then, in FIG. 10 again, it is judged whether or not the whole display mode key 53 is pressed by the user (step S10). If it is not pressed (step S10: NO), the operation flow returns to the step S8, so that the day-of-week EPG display selection mode is continued. On the other hand, if the whole display mode key 53 is pressed (step S10: YES), the operation flow proceeds o the popup mode (step S12). The processes in the popup mode is shown in FIG. 12.

In FIG. 12, at first, the whole display EPG picture plane is displayed by the popup mode as shown in FIG. 7 (step S32). Next, it is judged whether or not the cursor 75 is moved by the user (step S34). If the cursor 75 is moved (step S34: YES), the program content of the program cell which is selected after the movement is popup-displayed (step S36). Then, it is judged again whether or not the cursor 75 is moved by the user (step S38). If it is moved, the operational flow returns to the step S36. In this manner, by the processes at the steps S34 to S38, each time when the cursor is moved, the program content of the program cell which is selected after the movement is popup-displayed.

If the movement of the cursor 75 is not detected at the step S34 (step S34: NO) or S38 (step S38: NO), it is judged whether or not the decision key 45 is pressed by the user (step S40). If it is pressed (step S40: YES), the process of receiving the program which is selected at that moment is started, or the process of reserving the view or record is performed (step S42). Then, the processes are ended. On the other hand, if the decision key 45 is not pressed (step S40: NO), the operational flow returns to the main routine in FIG. 10.

Then, in FIG. 10 again, it is judged whether or not the whole display mode key 53 is pressed by the user (step S14). If it is pressed (step S14: YES), the operational flow returns to the step S8, so that the day-of-week EPG display selection mode is started. In this manner, transferring from the popup mode to the day-of-week EPG display selection mode is performed. If the whole display mode key 53 is not pressed (step S14: NO), it is judged whether or not the whole display key 52 is pressed by the user (step S16). If it is not pressed (step S16: NO), the operational flow returns to the step S12, so that the popup mode is continued. On the other hand, if the whole display key 52 is pressed (step S16: YES), the operational flow returns to the step S2, so as to restart the program viewing condition.

As described above, according to the present embodiment, the TV program table in the wide range is displayed on one picture plane at once by the while display EPG. Further, the whole display cursor of the whole display EPG is moved for the predetermined time period and for the predetermined number of channels. Therefore, the user can efficiently search his or her desired program out of the program table in the wide range. Furthermore, in the popup mode, since the popup picture plane is displayed at an appropriate position corresponding to the program cell which is currently selected, the user can easily watch the summary information of the pertinent program.

## Claims

1. A program guide displaying apparatus (1) characterized in that said apparatus comprises:
a program information obtaining device (3 to 7) for obtaining program information including information indicative of a program name, a genre name, a start time, a length of a program or an end time, a broadcasting channel and a broadcasting date of respective one of a plurality of programs;
a program information displaying device (8, 9, 200) for displaying the program information as for the programs in a first display mode or a second display mode which are exchangeable to each other, wherein said program information displaying device displays the program information in such a manner that the programs are distinguishable from each other by colors set for respective genres of the programs for a first time range on a time axis and a first channel range on a channel axis in the first display mode and that the programs are distinguishable from each other by at least program names of the programs for a second time range, which is narrower than the first time range, on the time axis and a second channel range, which is narrower than the first channel range, on the channel axis in the second display mode;
a range displaying device (9, 17, 200) for displaying a program table range to be displayed in the second display mode in such a manner that the program table range is distinguishable on a program table displayed in the first display mode;
a movement specifying device (12, 13, 17) for receiving an instruction to move the program table range; and
a moving device (9, 17) for moving the program table range on the program table displayed in the first display mode, in response to the instruction received by said movement specifying device, wherein said moving device moves the program table range for a distance equivalent to a predetermined number of unit-time-periods in a time axis direction and a predetermined number of channels in a channel axis direction.

2. A program guide displaying apparatus (1) characterized in that said apparatus comprises:
a program information obtaining device (3 to 7) for obtaining program information including information indicative of a program name, a genre name, a start time, a length of a program or an end time, a broadcasting channel and a broadcasting date of respective one of a plurality of programs; and
a displaying device (8, 9, 17, 200) for displaying the program information as for the programs as a program table,
said program table comprising (i) a plurality of program cells which are displayed in such a manner that the programs are distinguishable from each other by colors set for respective genres of the programs for a first time range on a time axis and a first channel range on a channel axis, (ii) a selected cell display, which is displayed within the program table and indicates a program cell which is currently selected, and (iii) a popup display, which is displayed at a vicinity of the selected cell display on the program table and indicates information related to the program corresponding to the program cell which is currently selected, wherein the popup display is displayed at a position determined in correspondence with a position of the program cell, which is currently selected, in the program table.

3. A program guide displaying method characterized in that said method comprises:
a program information obtaining process of obtaining program information including information indicative of a program name, a genre name, a start time, a length of a program or an end time, a broadcasting channel and a broadcasting date of respective one of a plurality of programs;
a program information displaying process of displaying the program information as for the programs in a first display mode or a second display mode which are exchangeable to each other, wherein said program information displaying process displays the program information in such a manner that the programs are distinguishable from each other by colors set for respective genres of the programs for a first time range on a time axis and a first channel range on a channel axis in the first display mode and that the programs are distinguishable from each other by at least program names of the programs for a second time range, which is narrower than the first time range, on the time axis and a second channel range, which is narrower than the first channel range, on the channel axis in the second display mode;
a range displaying process of displaying a program table range to be displayed in the second display mode in such a manner that the program table range is distinguishable on a program table displayed in the first display mode;
a movement specifying process of receiving an instruction to move the program table range; and
a moving process of moving the program table range on the program table displayed in the first display mode, in response to the instruction received by said movement specifying process, wherein said moving process moves the program table range for a distance equivalent to a predetermined number of unit-time-periods in a time axis direction and a predetermined number of channels in a channel axis direction.

4. A program guide displaying method characterized in that said method comprises:
a program information obtaining process of obtaining program information including information indicative of a program name, a genre name, a start time, a length of a program or an end time, a broadcasting channel and a broadcasting date of respective one of a plurality of programs; and
a displaying process of displaying the program information as for the programs as a program table,
said program table comprising (i) a plurality of program cells which are displayed in such a manner that the programs are distinguishable from each other by colors set for respective genres of the programs for a first time range on a time axis and a first channel range on a channel axis, (ii) a selected cell display, which is displayed within the program table and indicates a program cell which is currently selected, and (iii) a popup display, which is displayed at a vicinity of the selected cell display on the program table and indicates information related to the program corresponding to the program cell which is currently selected, wherein the popup display is displayed at a position determined in correspondence with a position of the program cell, which is currently selected, in the program table.
